# EUROPEAN PATENT APPLICATION

(11) **EP 2 472 498 A2**
(43) Date of publication of application: **04.07.2012**
(21) Application number: 11196016.7
(22) Date of filing: 29.12.2011
(51) Int. Cl.: G09G 3/20, G06F 3/147

(54) **Method and apparatus for reducing power consumption in mobile terminal**

(30) Priority: 04.01.2011 KR 20110000657
(71) Applicant: Samsung Electronics Co., Ltd., Suwon-si, Gyeonggi-do 442-742 (KR)
(72) Inventor: Jeong, Yong-Soo, 442-742 Gyeonggi-do (KR); Park, Jin, 442-742 Gyeonggi-do (KR); Kim, Min-Ji, 442-742 Gyeonggi-do (KR)
(74) Representative: Jenkins, Richard Gavin

(57) **Abstract**

A method for reducing power consumption in a mobile terminal includes displaying an application during a Power Saving (PS) mode; and determining a type of each signal included in a video signal of the displayed application, differentially correcting an Red-Green-Blue (RGB) value for the determined signal type according to a predetermined criteria depending on whether a user input occurs within a preset time period, or on an object type, and displaying the RGB-corrected video signal.

## Description

### BACKGROUND OF THE INVENTION

### Field of the Invention

The present invention relates to a method and apparatus for reducing power consumption by controlling the brightness of a displayed video signal in a mobile terminal.

### Description of the Related Art

Flat panel display devices such as Liquid Crystal Display (LCD) have been deployed in a mobile terminal. To output video signals through these flat panel display devices, a shading correction must be performed depending on the characteristics of the display devices as well as a gamma correction must be performed based on a preset gamma correction table. In a mobile terminal equipped with this display device, the power consumed by its battery increases or decreases depending on the brightness of color light emitted in a display area. Generally, as the displayed color is closer to black color, a less battery consumption occurs, but as the displayed color is close to white color, a greater the battery consumption occurs.

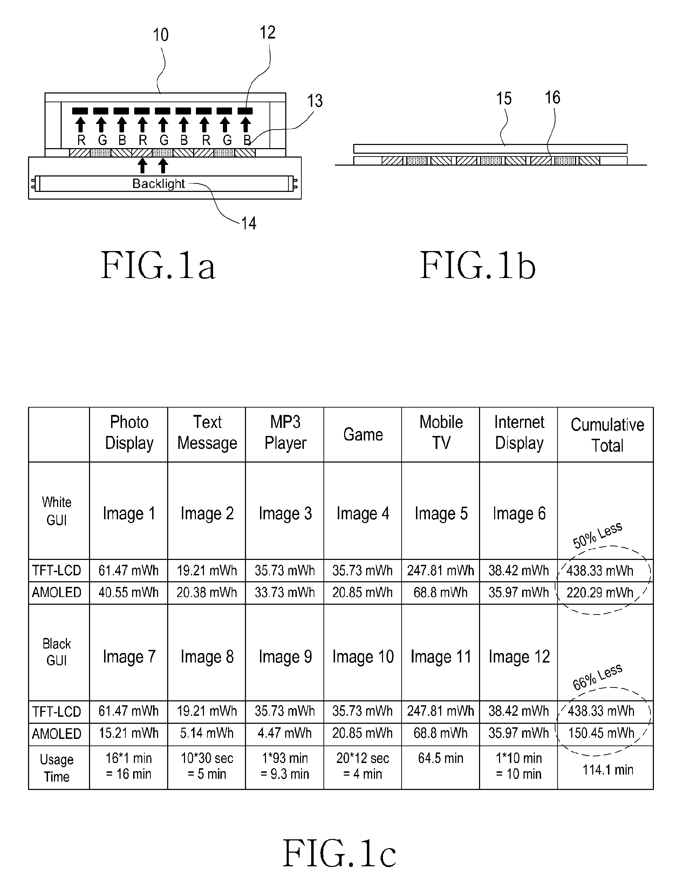

Referring to FIG 1A, a Thin Film Transistor LCD (TFT-LCD) touch screen mounted on the LCD display device includes an LCD panel, which has a transparent glass 10, a liquid crystal 12 attached onto the transparent glass 10 by adhesives, and a color filter 13 disposed under the liquid crystal 12 for display of video images. The touch screen further includes a Back Light Unit (BLU) 14 that provides light to the LCD panel.

In this TFT-LCD touch screen, the BLU 14 emits light to illuminate a light-emitting device. Thus, a mobile terminal equipped with the TFT-LCD touch screen may consume a supply of constant power from its battery.

Referring to FIG 1B, an Active Matrix Organic Light-Emitting Diode (AMOLED) touch screen illustrated in FIG 1B includes a transparent glass 15 and an AMOLED material 16 attached onto the transparent glass 15 by adhesives. When video signals are displayed on this touch screen having a simple structure, only related-color devices among all Red-Green-Blue (RGB) light-emitting devices emit light, and for the black background, no RGB light-emitting devices emit light.

By comparison, power consumptions of the TFT-LCD touch screen and the AMOLED touch screen for different mobile terminals are illustrated in FIG 1C.

Accordingly, there is a need for an improved scheme to extend the battery power in a mobile terminal.

### SUMMARY OF THE INVENTION

An aspect of exemplary embodiments of the present invention is to provide a power consumption reduction method and apparatus for determining a type of each signal by analyzing a video signal and differentially applying an RGB value and a gamma value for each signal type depending on whether a user input occurs within a preset time period during the displaying of video signals in a mobile terminal.

In accordance with one aspect of the present invention, there is provided a method for reducing power consumption in a mobile terminal. The method includes switching a mode of the mobile terminal to a Power Saving (PS) mode; displaying an application to be run in the PS mode; and determining a type of each signal included in a video signal of the displayed application, differentially correcting an Red-Green-Blue (RGB) value for the determined signal type individually according to a predetermined criteria depending on whether a user input occurs within a preset time period or on an object type, and displaying the RGB-corrected video signal.

In accordance with another aspect of the present invention, there is provided an apparatus for reducing power consumption in a mobile terminal. The apparatus includes a touch screen; a gamma correction table unit including gamma correction tables in which a gamma value sequentially decreases to perform gamma correction on each pixel constituting the video signal; and a controller for switching a mode of the mobile terminal to a Power Saving (PS) mode, displaying an application during the PS mode, determining a type of each signal included in a video signal of the displayed application, differentially correcting an Red-Green-Blue (RGB) value for the determined signal type individually according to a predetermined criteria depending on whether a user input occurs within a preset time period or on an object type, and displaying the RGB-corrected video signal.

In accordance with another aspect of the present invention, there is provided a mobile terminal for reducing power consumption which includes a memory; a gamma unit having gamma correction tables in which a gamma value sequentially decreases to perform a gamma correction on each pixel constituting the video signal; and a controller for switching a mode of the mobile terminal to a Power Saving (PS) mode, displaying an application to be run during a power saving (PS) mode, determining a type of each signal included in a video signal of the displayed application, correcting an Red-Green-Blue (RGB) value for the determined signal type according to a predetermined criteria depending on whether a user input occurs within a preset time period, or on an object type, and displaying the RGB-corrected video signal.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIGs. 1A to 1C illustrate power consumptions of LCDs for mobile terminals according to the prior art;
FIG. 2 illustrates a method for reducing power consumption in a mobile terminal according to an embodiment of the present invention;
FIGs. 3A to 3E illustrate schematic screens for reducing power consumption in a mobile terminal according to an embodiment of the present invention;
FIGs. 4A and 4B illustrate screens for reducing power consumption in a mobile terminal according to another embodiment of the present invention; and
FIG. 5 illustrates a structure of an apparatus for reducing power consumption in a mobile terminal according to an embodiment of the present invention.
Throughout the drawings, the same drawing reference numerals will be understood to refer to the same elements, features and structures.

### DETAILED DESCRIPTION

Exemplary embodiments of the present invention will now be described in detail with reference to the accompanying drawings. In the following description, specific details such as detailed configuration and components are merely provided to assist the overall understanding of exemplary embodiments of the present invention. Therefore, it should be apparent to those skilled in the art that various changes and modifications of the embodiments described herein can be made without departing from the scope and spirit of the invention. In addition, descriptions of well-known functions and constructions are omitted for clarity and conciseness.

The present invention is directed to reducing power consumption by controlling the brightness in a mobile terminal. More particularly, the present invention provides technology for determining a type of each signal by analyzing a video signal for a displayed application during brightness control, and differentially applying an RGB value and a gamma value for each signal type depending on whether a user input occurs within a preset time period during the displayed application in a mobile terminal, thereby reducing the power consumption of the mobile terminal by adaptively controlling the power that is consumed differently depending on the characteristics of a display of each mobile terminal and the type of an application service.

The mobile terminal, to which an embodiment of the present invention is applicable, is preferably a mobile communication terminal, and it will be understood by those of ordinary skill in the art that the present invention may be applied to all information technology devices and multimedia devices, such as digital broadcasting terminals, Personal Digital Assistants (PDAs), smart phones, and 3^{rd} generation (3G) terminals (e.g., International Mobile Telecommunication 2000 (IMT-2000) terminals, Wideband Code Division Multiple Access (WCDMA) terminals, Global System for Mobile communication General Packet Radio Service (GSM/GPRS) terminals, and Universal Mobile Telecommunication Service (UMTS) terminals, and to their applications.

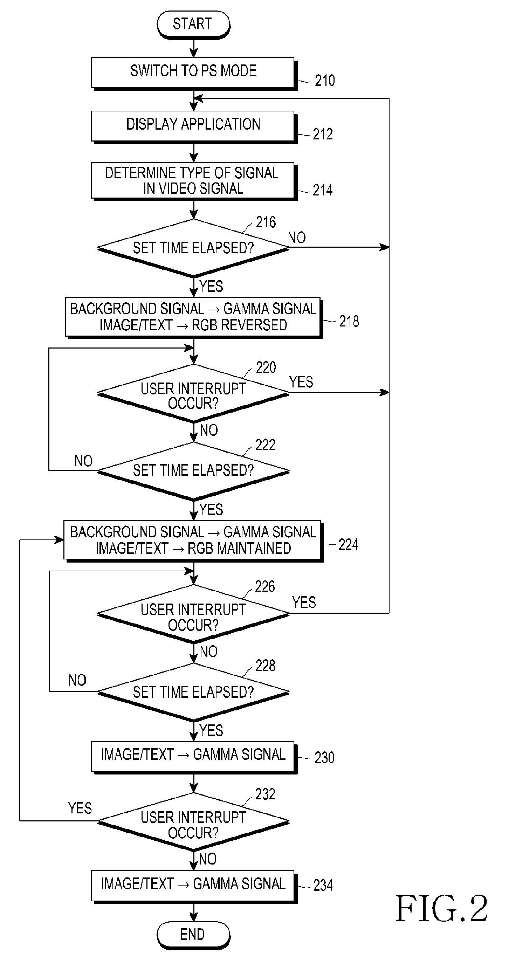

Hereinafter, a method for reducing power consumption in a mobile terminal according to an embodiment of the present invention will be described in detail below with reference to FIG 2.

FIG 2 illustrates a method for reducing power consumption in a mobile terminal according to an embodiment of the present invention.

In step 210, the mobile terminal switches its current mode to a Power Saving (PS) mode, thereby setting the PS mode. Here, the switching of PS mode can be preprogrammed to be activated according to predetermined criteria or a user can manually switch to the PS mode.

The mobile terminal displays an application(s) during the PS mode, in step 212, and determines a type of each signal included in a video signal of the displayed application in step 214. The video signal typically includes a background signal, an image signal, and a text signal, to any one of which each signal type corresponds.

In step 216, the mobile terminal checks if a preset time has elapsed after the application was displayed. If the preset time period has elapsed, the mobile terminal performs a gamma correction based on a gamma correction table if the type of the signal in the video signal of the displayed application is a background signal, and reverses an RGB signal if the type of the signal is the image signal or the text signal, in step 218.

The gamma correction is an operation of changing the signal to correct nonlinearity of the display device, and the correction is performed in a display device through which the video signal is output. The gamma correction refers to an operation of correcting the video signal to coincide with the characteristics of the display device, and is an image processing technique for correcting the nonlinear characteristics that occur depending on the visual characteristics of people for the brightness of input/output of the video signal to be displayed on the display device. If this gamma correction is not properly performed, a video signal may be output, which is different in quality from the video signal expected from the input video signal. Therefore, in step 218, the mobile terminal performs the gamma correction on the video signal of the displayed application based on multiple gamma correction tables in which its gamma value sequentially decreases. The greater the gamma value is, the higher the brightness becomes, and the smaller the gamma value is, the lower the brightness becomes.

The expression 'reversing an RGB signal' as used herein may refer to reversing an RGB value from (255, 0, 255) to (0, 255, 0) if the RGB value of 0 to 255 corresponding to the image signal or the text signal corresponds to (255, 0, 255).

In the process of reversing the image signal or the text signal, if its RGB value corresponds to, for example, a yellow text corresponding to (255, 255, 0) on a white background corresponding to (255, 255, 255), these RGB values may be reversed into a blue text corresponding to (0, 0, 255) and a black background corresponding to (0, 0, 0), respectively. In this case, because the blue text displayed on the black background decreases in visibility, the mobile terminal may readjust the reversed RGB values by applying its preset correction value or post-set correction value.

In step 220, the mobile terminal checks if a user interrupt occurs on its touch screen on which the application is displayed. The user interrupt means a pointing operation corresponding to any one of touching, tapping, flicking and dragging that the user performs in an area where the application is displayed, by touching a specific area on the touch screen of the mobile terminal. If a user interrupt has occurred, the mobile terminal returns to step 212 and repeats its succeeding steps. Otherwise, if no user interrupt has occurred, the mobile terminal checks in step 222 whether a preset time period has elapsed. If a preset time period has elapsed, the mobile terminal performs gamma correction based on a gamma correction table if a type of the signal in the video signal of the displayed application is a background signal, and maintains an RGB value for the RGB signal if a type of the signal is an image signal or a text signal, in step 224.

In step 226, the mobile terminal checks if a user interrupt has occurred when the signal having undergone the process of step 224 is displayed. If a user interrupt has occurred, the mobile terminal returns to step 212 and repeats its succeeding steps. Otherwise, if no user interrupt has occurred, the mobile terminal checks in step 228 whether a preset time period has elapsed. If a preset time period has elapsed, the mobile terminal performs gamma correction on the image or the text in the video signal in step 230, and checks in step 232 whether a user interrupt has occurred on its touch screen, on which the application whose image or the text has undergone gamma correction is displayed. If a user interrupt has occurred, the mobile terminal returns to step 224 and repeats its succeeding steps. Otherwise, if no user interrupt has occurred, the mobile terminal performs gamma correction on the image or the text in the video signal of the application in step 234.

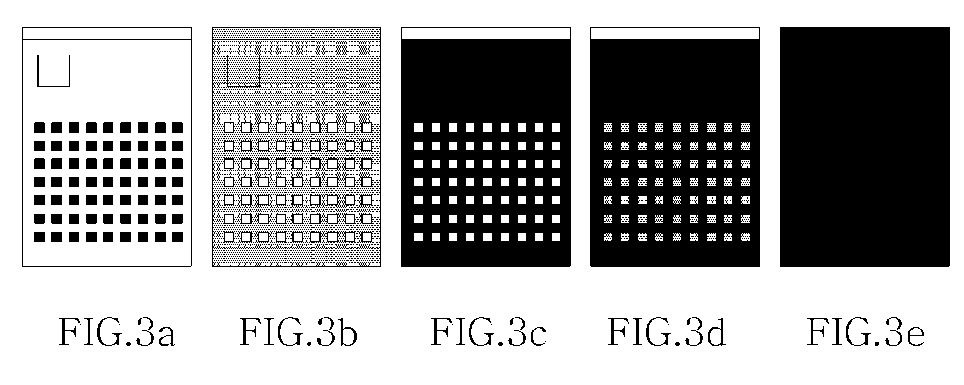

The operation of steps 210 to 234 will now be described with reference to FIGs. 3A to 3E. FIGs. 3A to 3E illustrate schematic screens for reducing power consumption in a mobile terminal according to an embodiment of the present invention. Each of squares illustrated in FIGs 3A to 3E indicates a character.

FIG 3A illustrates the displayed application the mobile terminal running in the PS mode in step 212. The mobile terminal checks in step 216 whether a preset time period has elapsed when the application is displayed on the screen of FIG 3A. If the preset time period has elapsed, the mobile terminal performs gamma correction based on a gamma correction table if a type of a signal in the video signal of the displayed application is a background signal, and reverses the RGB signal if the type of the signal is an image signal or a text signal, in step 218, as illustrated in FIG 3B.

As illustrated in FIG 3C, the mobile terminal checks in step 220 whether a user interrupt has occurred on its touch screen on which the application is displayed on the screen of FIG 3B. If no user interrupt has occurred, the mobile terminal checks in step 222 whether a preset time period has elapsed. If a preset time period has elapsed, the mobile terminal performs gamma correction based on a gamma correction table if a type of the signal in the video signal of the displayed application is a background signal, and maintains an RGB value for the RGB signal if the type of the signal is an image signal or a text signal, in step 224.

Similarly, FIG 3D illustrates the image signal or the text signal having undergone gamma correction in step 230 on the screen of FIG 3C. FIG 3E illustrates the image signal or the text signal having undergone gamma correction in step 234 on the screen of FIG 3D, locking the screen.

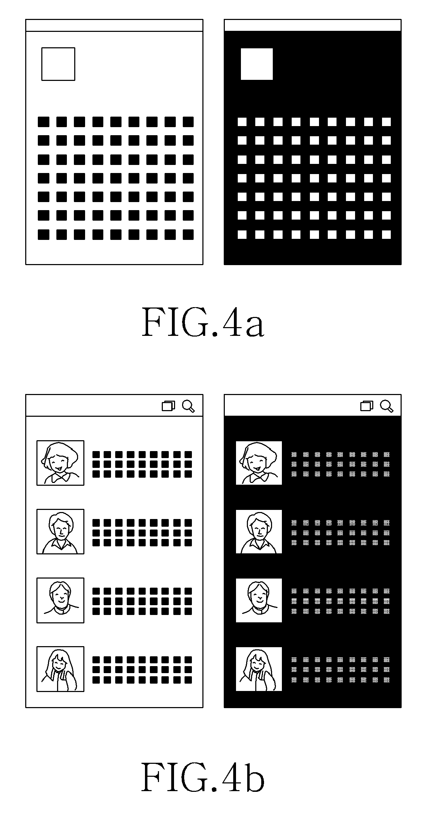

FIGs. 4A and 4B illustrate screens for reducing power consumption in a mobile terminal according to another embodiment of the present invention. Each of squares illustrated in FIGs 4A and 4B indicates a character.

As illustrated in FIG 4A, the mobile terminal displays an application during the PS mode, determines a type of an object for a video signal of the displayed application, and reverses an RGB value for a background signal in a video signal of a web page on a web browser, if the object type is a web browser. In this regard, generally, in the case of a web page provided by a wireless Internet access server, its background signal may be often white. In this case, the power consumption is remarkably high, compared with when the background signal is black. Thus, the mobile terminal performs RGB reversion on the background signal.

In the process of reversing the image signal or the text signal, if its RGB value corresponds to, for example, a yellow text corresponding to (255, 255, 0) on a white background corresponding to (255, 255, 255), these RGB values may be reversed into a blue text corresponding to (0, 0, 255) and a black background corresponding to (0, 0, 0), respectively. In this case, because the blue text displayed on the black background decreases in visibility, the mobile terminal may readjust the reversed RGB values by applying its preset correction value or post-set correction value.

As illustrated in FIG 4B, the mobile terminal determines a type of an object for a video signal of the displayed application, and if the object type corresponds to a specific application, for example, Twitter® or Facebook®, its background signal may be often white. Even in this case, the power consumption is remarkably high, compared with when the background signal is black. Thus, the mobile terminal performs RGB reversion on the background signal.

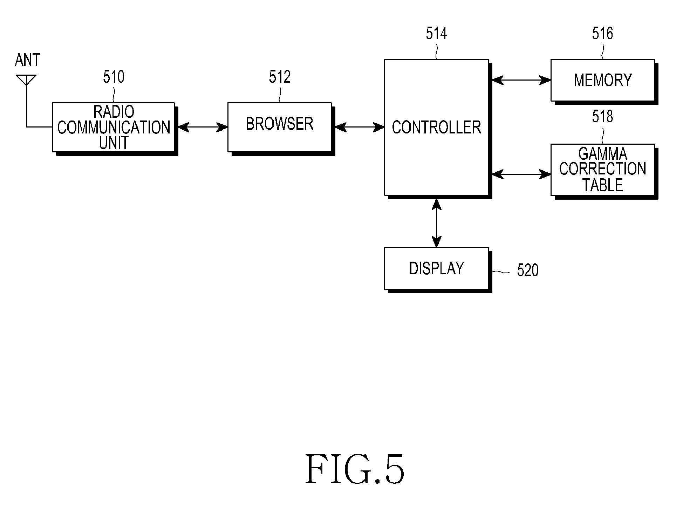

Now, an apparatus for reducing power consumption in a mobile terminal according to an embodiment of the present invention will now be described in detail with reference to FIG 5.

FIG 5 illustrates a structure of an apparatus for reducing power consumption in a mobile terminal according to an embodiment of the present invention.

Referring to FIG 5, the power consumption reduction apparatus includes a radio communication unit 510, a browser 512, a controller 514, a memory 516, a gamma correction table unit 518, and a display 520.

The radio communication unit 510 receives a radio downlink signal from the air via an antenna ANT, and outputs downlink data obtained by demodulating the radio downlink signal to the controller 514. The radio communication unit 510 generates a radio uplink signal by modulating uplink data received from the controller 514, and transmits the generated radio uplink signal into the air via the antenna ANT. Preferably, the modulation and demodulation may be performed by Code Division Multiple Access (CDMA), and may also be performed by Frequency Division Multiplexing (FDM) and/or Time Division Multiplexing (TDM).

The browser 512, under control of the controller 514, accesses a service server through the radio communication unit 510 to support a wireless Internet service at the request of the mobile terminal.

The gamma correction table unit 518 includes a gamma correction table in which a gamma value sequentially decreases to perform gamma correction on each pixel constituting a video signal.

The memory 516 may store processing/controlling programs for the controller 514, and may temporarily store input/output data.

The controller 514, which generally controls the overall operation of the mobile terminal, may set its mode as a PS mode, display an application it will run in the PS mode, determine a type of each signal included in a video signal of the displayed application, and differentially correct an RGB value for each signal type depending on whether a user input occurs within a preset time, or on a type of an object, in displaying the video signal.

The controller 514 performs gamma correction on each video signal whose RGB value has undergone differential correction during its display, by applying a gamma correction table.

The controller 514 performs gamma correction based on the gamma correction table unit 518 if a type of the video signal is a background signal, and reverses or maintains the RGB signal if the type of the video signal is an image signal or a text signal.

Also, the controller 514 reverses the RGB signal if the type of the object is the background signal or the text signal, and maintains the RGB signal if the type of the object is the image signal.

In the process of reversing the image signal or the text signal, if its RGB value corresponds to, for example, a yellow text corresponding to (255, 255, 0) on a white background corresponding to (255, 255, 255), the controller 514 may reverse these RGB values into a blue text corresponding to (0, 0, 255) and a black background corresponding to (0, 0, 0), respectively. In this case, because the blue text displayed on the black background decreases in visibility, the mobile terminal may readjust the reversed RGB values by applying its preset correction value or post-set correction value.

As is apparent from the foregoing description, the present invention may differentially apply an RGB value and a gamma value for a type of each signal in a displayed video signal in displaying the video signal in a mobile terminal, thereby the power consumption of the mobile terminal by adaptively controlling the power that is consumed differently depending on the characteristics of a display of each mobile terminal and the type of an application service.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for reducing power consumption in a mobile terminal having a screen, **characterized by**:
displaying an application during a Power Saving (PS) mode;
determining a type of each signal included in a video signal of the displayed application, correcting an Red-Green-Blue (RGB) value for the determined signal type according to a predetermined criteria depending on whether an input occurs within a preset time period on the screen or on an object type; and
displaying the RGB-corrected video signal.

2. The method of claim 1, further comprising applying a gamma correction table in which a gamma value sequentially decreases to each video signal whose RGB value has undergone the correction for display.

3. The method of claim 1, **characterized in that** the video signal comprises a background signal, an image signal and a text signal.

4. The method of claim 1, **characterized in that** the correction according to the predetermined criteria depending on whether the input occurs within the preset time period, comprises:
performing a gamma correction using a gamma correction table if the signal type is a background signal; and
reversing or maintaining the RGB signal if the signal type is an image signal or a text signal.

5. The method of claim 2, **characterized in that** if the input occurs in the video signal whose RGB value has undergone the correction, the video signal is restored to the video signal prior to the correction.

6. The method of claim 1, **characterized in that** the correction depending on the object type, comprises:
reversing the RGB signal if the object type is a background signal or a text signal; and
maintaining the RGB signal if the object type is an image signal.

7. The method of claim 6, **characterized in that** the object type is one of a web browser and a specific application having a substantial white background signal.

8. An apparatus for reducing power consumption in a mobile terminal having a touch screen, **characterized by**:
a gamma correction table unit (518) including gamma correction tables in which a gamma value sequentially decreases to perform a gamma correction on each pixel constituting the video signal; and
a controller (514) for switching a mode of the mobile terminal to a Power Saving (PS) mode, displaying an application to be run in the PS mode, determining a type of each signal included in a video signal of the displayed application, correcting an Red-Green-Blue (RGB) value for the determined signal type according to a predetermined criteria depending on whether an input occurs within a preset time period, or on an object type, and displaying the RGB-corrected video signal.

9. The apparatus of claim 8, **characterized in that** the controller (514) performs a gamma correction by applying a gamma correction table to each video signal whose RGB value has undergone the correction for a display.

10. The apparatus of claim 8, **characterized in that** the controller (514) performs a gamma correction using a gamma correction table if the signal type is a background signal, and reverses or maintains the RGB signal if the signal type is an image signal or a text signal.

11. The apparatus of claim 8, **characterized in that** the controller (514) reverses the RGB signal if the object type is a background signal or a text signal, and maintains the RGB signal if the object type is an image signal.

12. The method of claim 11, **characterized in that** the object type is one of a web browser and a specific application having a substantial white background signal.
